# EUROPÄISCHE PATENTSCHRIFT

(11) **EP 0 739 618 B1**
(45) Veröffentlichungstag und Bekanntmachung des Hinweises auf die Patenterteilung: **18.07.2001**
(21) Anmeldenummer: 96105260.2
(22) Anmeldetag: 02.04.1996
(51) Int. Cl.: A61G 12/00

(54) **Versorgungseinheit für Krankenzimmer**
Supply unit for sickrooms
Unité d'alimentation pour chambres de malade

(30) Priorität: 24.04.1995 DE 29506542 U
(43) Veröffentlichungstag der Anmeldung: 30.10.1996
(73) Patentinhaber: TRILUX-LENZE GmbH & Co. KG, D-59759 Arnsberg (DE)
(72) Erfinder: Grimm, Manfred, 59759 Arnsberg (DE)
(74) Vertreter: Selting, Günther, Dipl.-Ing.

(56) Entgegenhaltungen:
- EP-A- 0 215 212
- EP-A- 0 338 210
- EP-A- 0 563 495

## Beschreibung

Die Erfindung betrifft eine Versorgungseinheit für Krankenzimmer, mit einem Versorgungsbalken, der Gas- und Stromleitungen aufnimmt und an seiner Unterseite eine Bestückungswand mit Anschlußvorrichtung aufweist, wobei der Versorgungsbalken zusätzlich mit einer Leuchteneinheit versehen ist. Eine solche Versorgungseinheit ist aus dem Dokument EP-A-0 215 212 bekannt.

Üblicherweise sind Krankenzimmer mit einer Versorgungseinheit ausgestattet, die aus einem an der Wand montierten Versorgungsbalken besteht. Dieser Versorgungsbalken enthält Anschlüsse für Strom, Gase, Telefon, Radio u.dgl. Er ist außerdem mit einer Leuchteneinheit ausgestattet, die in der Regel in den Versorgungsbalken integriert ist und ein Leuchtenraster aufweist, das den Lichtdurchtritt nach unten ermöglicht, sowie eine lichtdurchlässige Scheibe für den Lichtaustritt nach oben zur indirekten Raumbeleuchtung. Die bekannten Versorgungseinheiten sind standardisiert, wobei jeweils die Leuchteneinheit an einer bestimmten Stelle angebracht ist.

Der Erfindung liegt die Aufgabe zugrunde, eine Versorgungeinheit zu schaffen, die verändert werden kann, um sie der jeweiligen Aufstellung des Krankenbettes oder den gewünschten Beleuchtungsverhältnissen anzupassen.

Die Lösung dieser Aufgabe erfolgt erfindungsgemäß mit den im Patentanspruch 1 angegebenen Merkmalen.

Bei der erfindungsgemäßen Versorgungseinheit ist die Leuchteneinheit, bestehend aus nach oben abstrahlendem Raumlicht und nach unten strahlendes Leselicht, als gegenüber dem Versorgungsbalken separate Einheit ausgebildet, also nicht in den Versorgungsbalken integriert, sondern außen am Versorgungsbalken angebracht. Die Leuchteneinheit liegt an einer Anlagewand des Versorgungsbalkens an und ist längs der Anlagewand stufenlos verschiebbar. Dadurch wird erreicht, daß die Leuchteneinheit in Längsrichtung des Versorgungsbalkens an jeder beliebigen Stelle positioniert werden kann. Wenn die Position des Krankenbettes verändert wird, kann die Leuchteneinheit so verschoben werden, daß sie sich mittig über dem Krankenbett befindet. Da die Anlagewand des Versorgungsbalkens, die die Leuchteneinheit abstützt, von der Bestückungswand des Versorgungsbalkens abgesetzt ist, wird das Verschieben der Leuchteneinheit nicht durch Anschlußvorrichtungen oder eingesteckte Stecker behindert. Ein weiterer Vorteil besteht darin, daß die Querschnittsgröße des Versorgungsbalkens gegenüber bekannten Konstruktionen verkleinert werden kann, weil die Leuchteneinheit, die sich nur über einen Teil der Länge des Versorgungsbalkens erstreckt, die Querschnittsgröße des gesamten Versorgungsbalkens nicht mehr diktiert. Dadurch sind Materialeinsparungen möglich. Schließlich kann auch der relativ kleinformatige Versorgungsbalken ohne Leuchteneinheit verwendet werden.

Vorzugsweise ist die Leuchteneinheit mit einem die Oberseite des Versorgungsbalkens übergreifenden Ausleger versehen, der im wandnahen Bereich des Versorgungsbalkens verankert ist. Auf diese Weise werden Verankerungsmittel in Form von Schienen oder Schlitzen an der Vorderseite des Versorgungsbalkens vermieden.

Gemäß einer bevorzugten Weiterbildung der Erfindung ist die Anlagewand des Versorgungsbalkens pultartig geneigt, wobei das Gehäuse der Leuchteneinheit im wesentlichen dreieckförmig mit nach unten gerichteter Spitze ist. Das Leuchtengehäuse liegt somit schräg auf der Anlagewand auf, während die Lichtabstrahlung aus dem Leuchtengehäuse schräg nach unten erfolgt. Um die Tragfähigkeit der Anlagewand zu vergrößern, kann an der pultartigen Anlagewand oder an der daran anliegenden Wand des Leuchtengehäuses eine Hafteinrichtung, z.B. Saugnäpfe o.dgl., vorgesehen sein.

Eine besonders zweckmäßige Ausführungsform ergibt sich, wenn der Versorgungsbalken an seiner Unterseite eine längslaufende Befestigungsschiene aufweist, die ihm integral angeformt ist. Auf diese Weise besteht die Möglichkeit, Sauerstoffflaschen, Infusionsgeräte oder andere medizinische Hilfseinrichtungen direkt an dem Versorgungsbalken zu befestigen. Der Verlauf der Befestigungsschiene an der Unterseite stört die Anbringung der Leuchteneinheit nicht.

Die Leuchteneinheit ist vorzugsweise mit Schnellverschlüssen am Versorgungskanal verankert, so daß sie leicht montiert werden kann. Dabei besteht die Möglichkeit, an dem Versorgungsbalken eine Klappe vorzusehen, die zugleich die Anlagewand für die Leuchteneinheit bildet. Bei abgenommener Leuchteneinheit kann die Klappe aufgeschwenkt werden, um Zugang zum Innern des Versorgungsbalkens zu erhalten.

Im folgenden wird unter Bezugnahme auf die Zeichnungen ein Ausführungsbeispiel der Erfindung näher erläutert.

Es zeigen:
- Fig. 1: eine Frontansicht der Versorgungseinheit und

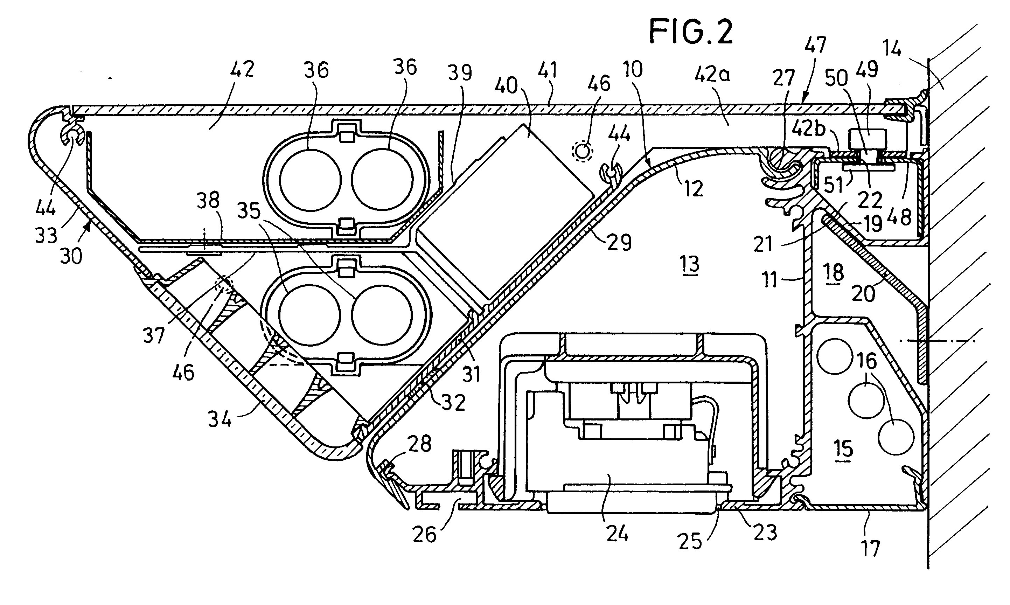

- Fig. 2: einen Querschnitt entlang der Linie II-II von Fig. 1.

Die dargestellte Versorgungseinheit weist einen langgestreckten Versorgungsbalken 10 auf, der aus einem winkelförmigen Basisprofil 11 und einem daran als schwenkbarer Deckel befestigten Klappenprofil 12 besteht. Das Basisprofil 11 und das Klappenprofil 12 schließen einen Kanal 13 ein, der sich in Längsrichtung durch den gesamten Versorgungsbalken 10 erstreckt. Die Profile 11 und 12 bestehen aus Strangpreßteilen, die über ihre Länge gleichen Querschnitt haben. An den Enden ist der Versorgungsbalken 10 durch Stirnwände abgeschlossen.

Das Basisprofil 11 wird an der Wand 14 eines Raumes befestigt. Es enthält im wandnahen Bereich einen Aufnahmekanal 15 für Gasrohre 16. Dieser Aufnahmekanal 15 ist nach unten hin durch einen Klappdeckel 17 verschlossen. Über dem Aufnahmekanal 15 befindet sich ein längslaufender Verankerungskanal 18, der zur Wand 14 hin offen ist und durch eine schräge Wand 19 des Basisprofils 11 begrenzt wird. Die Wand 19 wird auf eine an der Wand 14 befestigte winkelförmige Wandschiene 20 oder an Haken aufgelegt, welche den Versorgungskanal 10 trägt. Über dem Befestigungskanal 18 befindet sich ein Verankerungskanal 21, der nach oben hin in Form eines Verankerungsschlitzes 22 offen ist.

Die horizontale Unterseite des Basisprofils 11 bildet die Bestückungswand 23. An ihr sind elektrische Anschlußvorrichtungen 24 in Form von Steckdosen u.dgl. vorgesehen, die hinter jeweils einer Bohrung 25 installiert sind und ein Stück weit aus dieser Bohrung nach unten vorstehen.

Ferner ist an der Bestückungswand 23 im wandfernen Bereich (bezogen auf die Raumwand 14) eine längslaufende Befestigungsschiene 26 vorgesehen, die dem Basisteil 11 einstückig angeformt ist. Die Befestigungsschiene 26 dient zur Anbringung von Haltern für Gasflaschen, Infusionsvorrichtungen oder anderen medizinischen Hilfsmitteln.

Das Klappenprofil 12 ist mit dem Basisprofil 11 durch ein Gelenk 27 verbunden, das sich am oberen Ende des Basisprofils 11 befindet. Um dieses Gelenk 27 herum kann das Klappenprofil 12 hochgeschwenkt werden. An dem dem Gelenk 27 gegenüberliegenden Ende sind am Basisprofil 11 und am Klappenprofil 12 Rastmittel 28 vorgesehen, die das Klappenprofil 12 in der Schließstellung verrasten.

Die Vorderwand des Klappenprofils 12 bildet eine ebene Anlagewand 29 für die Leuchteneinheit 30. Die Anlagewand 29 ist bei geschlossenem Klappenprofil 12 pultartig schräggestellt, wobei sie unter etwa 45° schräg nach oben zur Raumwand 14 hin verläuft. Angrenzend an die Anlagewand 29 geht das Basisprofil 12 in einem Bogen in einen horizontalen Bereich über, an den sich das Gelenk 27 anschließt.

Das Gehäuse der Leuchteneinheit 30 besteht aus einem im Querschnitt rechtwinkligen Dreiecksprofil in Form eines rechtwinkligen Dreiecks, das mit seiner Spitze nach unten gerichtet ist und das an seiner nach oben weisenden Basis offen ist. Die eine Wand 31 des Gehäuseprofils liegt an der Anlagewand 29 des Versorgungsbalkens 10 an. Die Wände 29 und 31 haben dieselbe Neigung, so daß sie im wesentlichen parallel verlaufen. An der Wand 31 können an bestimmten Stellen Saugnäpfe 32 oder andere Gleitverhinderer vorgesehen sein, die an der Anlagewand 29 haften. Die Außenwand 33 des Profilgehäuses ist unter etwa 45° schräg nach unten zur Raumwand 14 gerichtet. Sie enthält in einem Ausschnitt ein Leuchtenraster 34 für den schräg nach unten gerichteten Lichtaustritt aus der Leuchteneinheit 30.

Die Leuchteneinheit 30 enthält mehrere Lampen 35,36. Die Lampen 36 dienen der Lichtabstrahlung nach oben zur indirekten Raumbeleuchtung. Unter ihnen befindet sich ein Reflektor 38. Die Reflektoren 37,38 sind an einem separaten Montageprofil 39 befestigt, das im Innern der Leuchteneinheit 30 angeordnet ist und außerdem das Vorschaltgerät 40 für die Lampen 35,36 enthält. Die offene Oberseite des Gehäuses der Leuchteneinheit 30 ist mit einer lichtdurchlässigen Platte 41 bedeckt.

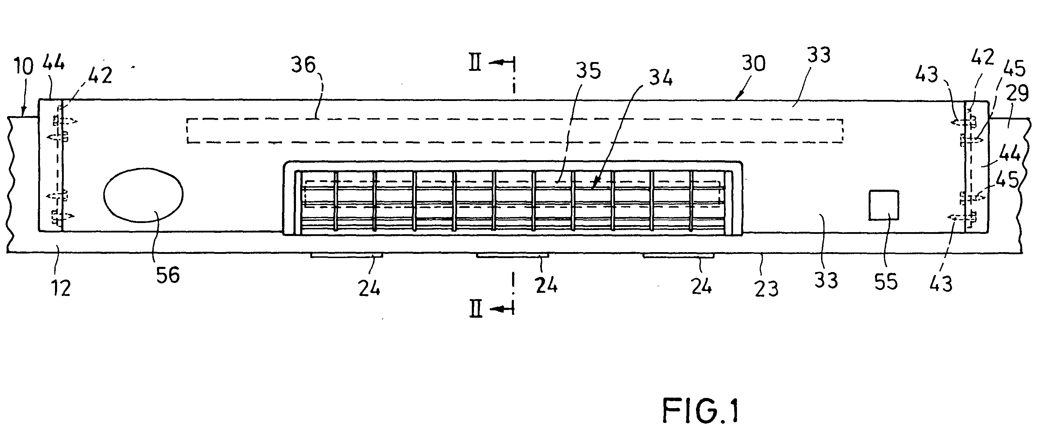

Die Enden des Gehäuseprofils 33 sind mit jeweils einer Stirnplatte 42 verschlossen. Diese Stirnplatte 42 ist mit Schrauben 43 (Fig. 1), die von außen eingeschraubt sind und in Schraubkanäle 44 des Gehäuseprofils 33 einschneiden, an dem Gehäuseprofil befestigt. Jede Platte 42 ist ihrerseits durch ein Kopfstück 44 bedeckt, das mit Schrauben 45 (Fig. 1) an der Platte 42 angebracht ist. Die Schrauben 45 sind von innen her durch Löcher 46 der Platte 42 gesteckt und in Schraubkanäle des Kopfstücks 44 eingeschraubt. Das Kopfstück 44 hat also eine durchgehende Außenfläche, die nicht von Löchern durchsetzt ist, so daß sich keine Schmutzablagerungen bilden können.

Die Platten 42 und die Kopfstücke 44, deren Form generell der Querschnittsform des Gehäuseprofils 33 entspricht, haben an ihrer Oberseite horizontale Arme 42a, die zur Wand 14 hin abstehen und einen Ausleger 47 der Leuchtenheit bilden, welcher den oberen Bereich des Versorgungsbalkens 10 bis zur Wand 14 hin überspannt. Von den Enden der Arme 42a stehen horizontale Laschen 42b nach innen ab. Diese Laschen 42b liegen auf einer horizontalen Oberwand 48 des Basisprofilteils 11 auf. In dieser Oberwand 48 verläuft der Verankerungsschlitz 22. Die Befestigung des Auslegers 47 der Leuchteneinheit 30 an dem Basisprofilteil 11 erfolgt mit Verschlußteilen 49, die jeweils einen Schaft 50 haben, welcher durch eine Öffnung der Lasche 42b und den Verankerungsschlitz 22 hindurchragt und am unteren Ende einen Balken 51 trägt, der längsgestellt durch den Verankerungsschlitz 22 hindurchpaßt, quergestellt jedoch die Wand 48 untergreift. Die Verschlußteile 49 werden bei abgehobener Platte 41 durch den Verankerungsschlitz 22 hindurchgesteckt und gedreht. Auf diese Weise wird der Ausleger 47 der Leuchteneinheit 30 auf der Oberseite des Versorgungsbalkens verankert. Im übrigen erfolgt die Abstützung der Leuchteneinheit 30 durch die schräge Anlagefläche 29 des Versorgungsbalkens 10.

Wie Fig. 1 zeigt, kann die Leuchteneinheit an der Vorderwand 33 einen zusätzlichen Strahler 56, der als Leselicht dient und ein Schalter 55 angebracht werden kann.

Bei der Montage der Versorgungseinheit wird zunächst das Basisprofil 11 in den Befestigungsbügel 20 eingehängt. Durch Öffnen des Klappenprofils 12 können die Anschlußvorrichtungen 24 im Innern des Aufnahmekanals. 13 verdrahtet werden. Nachdem das Klappenprofil 12 geschlossen wurde, wird die Leuchteneinheit 13 aufgesetzt und mit dem Verschlußteil 49 an der Wand 48 verankert. In den Befestigungskanal 21 werden die Kabel für die Stromversorgung der Lampen der Leuchteneinheit 30 eingezogen. Diese Kabel können an beliebiger Stelle durch den Verankerungsschlitz 22 hindurch zu den Lampenfassungen bzw. zum Vorschaltgerät 40 geführt werden.

Die Leuchteneinheit 30, die nur einen Teil der Länge des Versorgungsbalkens 10 einnimmt, kann auf dem Versorgungsbalken beliebig verschoben und in der neuen Stellung festgeklemmt werden.

## Patentansprüche

1. Versorgungseinheit für Krankenzimmer, mit einem Gas- und Stromleitungen aufnehmenden Versorgungsbalken (10), dessen Unterseite als Bestückungswand (23) für Anschlußvorrichtungen (24) ausgebildet ist, und mit einer längs des Versorgungsbalkens (10) verlaufenden langgestreckten Leuchteneinheit (30),
**dadurch gekennzeichnet,**
daß die Leuchteneinheit (30) als dem Versorgungsbalken (10) vorgesetzte separate Einheit ausgebildet ist, die an einer von der Bestückungswand (23) abgesetzten Anlagewand (29) des Versorgungsbalkens (10) anliegt und längs der Anlagewand (29) stufenlos verschiebbar ist.

2. Versorgungseinheit nach Anspruch 1, dadurch gekennzeichnet, daß die Leuchteneinheit (30) einen die Oberseite des Versorgungsbalkens (10) übergreifenden Ausleger (47) aufweist, der im wandnahen Bereich des Versorgungsbalkens (10) verankert ist.

3. Versorgungseinheit nach Anspruch 2, dadurch gekennzeichnet, daß im wandnahen Bereich des Versorgungsbalkens (10) ein längslaufender Verankerungsschlitz (22) zum Befestigen des Auslegers (47) der Leuchteneinheit (30) vorgesehen ist.

4. Versorgungseinheit nach einem der Ansprüche 1-3, dadurch gekennzeichnet, daß die Anlagewand (29) pultartig geneigt ist und das Gehäuse der Leuchteneinheit (30) im wesentlichen dreieckförmig mit nach unten gerichteter Spitze ist.

5. Versorgungseinheit nach einem der Ansprüche 1-4, dadurch gekennzeichnet, daß der Versorgungsbalken (10) an seiner Unterseite eine längslaufende Befestigungsschiene (26) aufweist.

6. Versorgungseinheit nach einem der Ansprüche 1-5, dadurch gekennzeichnet, daß der Versorgungsbalken (10) im wandnahen Bereich einen Aufnahmekanal (15) für Gasrohre (16) und darüber einen zur Wand (24) hin offenen Befestigungskanal (18) aufweist und daß über dem Befestigungskanal (18) ein nach oben offener Verankerungskanal (21) angeordnet ist.

7. Versorgungseinheit nach Anspruch 6, dadurch gekennzeichnet, daß der Verankerungskanal (21) gleichzeitig Kabelkanal für die Leuchteneinheit (30) ist.

8. Versorgungseinheit nach einem der Ansprüche 1-7, dadurch gekennzeichnet, daß der Versorgungsbalken (10) ein Basisprofil (11) und ein schwenkbar daran befestigtes Klappenprofil (12) aufweist, welches die Anlagewand (29) bildet.

9. Versorgungseinheit nach einem der Ansprüche 1-8, dadurch gekennzeichnet, daß das Gehäuse der Leuchteneinheit (30) aus einem an den Enden durch Kopfstücke (44) abgeschlossenen Gehäuseprofil (33) besteht.

## Claims

1. Supply unit for sickrooms, comprising a supply beam (10) accommodating gas and power lines, the lower side of the supply beam (10) being configured as an equipment wall (23) to be equipped with connecting devices (24), and an elongate lightening unit (30) extending along the supply beam (10),
**characterized in that**
the lightening unit (30) is configured as a separate unit arranged in front of the supply beam (10), said unit bearing against a bearing wall (29) of the supply beam (10) offset from the equipment wall (23) and being continuously shiftable along said bearing wall (29).

2. Supply unit according to claim 1, characterized in that the lightening unit (30) comprises a cantilever arm (47) overgripping the upper side of the supply beam (10), said cantilever arm (47) being anchored in the near-wall area of the supply beam (10).

3. Supply unit according to claim 2, characterized in that in the near-wall area of the supply beam (10) a longitudinal anchoring slot (22) is provided for fastening the cantilever arm (47) of the lightening unit (30).

4. Supply unit according to one of claims 1-3, characterized in that the bearing wall (29) is inclined in a penthouse manner and the housing of the lightening unit (30) is of an essentially triangular configuration with the vertex of the triangle pointing downwards.

5. Supply unit according to one of claims 1-4, characterized in that the supply beam (10) comprises a longitudinal fastening rail (26) on its lower side.

6. Supply unit according to one of claims 1-5, characterized in that the supply beam (10) comprises in the near-wall area an accommodation duct (15) for gas pipes (16) and thereabove a fastening duct (18) open towards the wall (14), and that above the fastening duct (18) an anchoring duct (21) open towards the top is arranged.

7. Supply unit according to claim 6, characterized in that the anchoring duct (21) also serves as a cable duct for the lightening unit (30).

8. Supply unit according to one of claims 1-7, characterized in that the supply beam (10) comprises a base profile (11) and a flap profile (12) pivoted thereto, said flap profile (12) forming the bearing wall (29).

9. Supply unit to one of claims 1-8, characterized in that the housing of the lightening unit (30) comprises a housing profile (33) terminated at the ends by head pieces (44).

## Revendications

1. Unité d'alimentation pour chambre de malade, comprenant une traverse d'alimentation (10) recevant des tubes de gaz et des câbles électriques et dont la face inférieure est conçue sous forme de paroi à équiper (23) destinée à des dispositifs de raccordement (24), et une unité d'éclairage (30) allongée dans le sens longitudinal s'étendant le long de la traverse d'alimentation (10), caractérisée en ce que l'unité d'éclairage (30) est conçue sous forme d'unité séparée, qui est montée en avant de la traverse d'alimentation (10) et qui vient en appui contre une paroi d'appui (29) de la traverse d'alimentation (10) coupée par la paroi à équiper (23), et peut coulisser continûment le long de la paroi d'appui (29).

2. Unité d'alimentation selon la revendication 1, caractérisée en ce que l'unité d'éclairage (30) est munie d'un bras (47) qui s'engage au-dessus de la face supérieure de la traverse d'alimentation (10), lequel bras est ancré dans la zone de la traverse d'alimentation (10) à proximité du mur.

3. Unité d'alimentation selon la revendication 2, caractérisée en ce que dans la zone de la traverse d'alimentation (10) à proximité du mur, il est prévu une fente d'ancrage (22) longitudinale, destinée à la fixation du bras (47) de l'unité d'éclairage (30).

4. Unité d'alimentation selon l'une quelconque des revendications 1 à 3, caractérisée en ce que la paroi d'appui (29) est inclinée en forme de pupitre et le boîtier de l'unité d'éclairage (30) est sensiblement en forme de triangle, dont le sommet est orienté vers le bas.

5. Unité d'alimentation selon l'une quelconque des revendications 1 à 4, caractérisée en ce que la traverse d'alimentation (10) est munie, sur sa face inférieure, d'un rail de fixation (26) longitudinal.

6. Unité d'alimentation selon l'une quelconque des revendications 1 à 5, caractérisée en ce que la traverse d'alimentation (10) est munie, dans la zone à proximité du mur, d'un canal de réception (15), destiné à recevoir des tubes de gaz (16), et, au-dessus de celui-ci, d'un canal de fixation (18) ouvert vers le mur (14) et en ce qu'un canal d'ancrage (21) ouvert vers le haut est disposé au-dessus du canal de fixation (18).

7. Unité d'alimentation selon la revendication 6, caractérisée en ce que le canal d'ancrage (21) forme en même temps un canal de réception des câbles de l'unité d'éclairage (30).

8. Unité d'alimentation selon l'une quelconque des revendications 1 à 7, caractérisée en ce que la traverse d'alimentation (10) comporte un profilé de base (11) et un profilé rabattable (12), qui est fixé contre celui-ci de manière à pouvoir pivoter et qui forme la paroi d'appui (29).

9. Unité d'alimentation selon l'une quelconque des revendications 1 à 8, caractérisée en ce que le boîtier de l'unité d'éclairage (30) est formé par un profilé en forme de boîtier (33) dont les extrémités sont fermées par des parties frontales (44).
